# EUROPEAN PATENT SPECIFICATION

(11) **EP 0 487 072 B1**
(45) Date of publication and mention of the grant of the patent: **22.05.1996**
(21) Application number: 91119827.3
(22) Date of filing: 21.11.1991
(51) Int. Cl.: H04N 3/16, H04N 5/06

(54) **Vertical deflection signal generator**
Vertikalablenkung-Signalserzeuger
Générateur de signal de déflection verticale

(30) Priority: 21.11.1990 JP 319036/90
(43) Date of publication of application: 27.05.1992
(73) Proprietor: MATSUSHITA ELECTRIC INDUSTRIAL CO., LTD., Kadoma-shi, Osaka-fu, 571 (JP)
(72) Inventor: Tagen, Hajime, Yao-shi, Osaka-fu 581 (JP); Nishi, Masahiro, Takatsuki-shi, Osaka-fu 569 (JP)
(74) Representative: Eisenführ, Speiser & Partner

(56) References cited:
- EP-B- 0 162 116
- GB-A- 2 095 509
- US-A- 3 995 109
- PATENT ABSTRACTS OF JAPAN, vol. 12, no. 447 (E-685), 24th November 1988;& JP-A-63 173 477

## Description

The present invention relates to a vertical deflection signal generator for use in a television receiver and, more particularly, to a vertical deflection signal generator in a digital television receiver which uses the vertical deflection signal having a frequency equal to a double of the frequency of the vertical synchronization signal.

Digital television receivers which uses the vertical deflection signal having a frequency equal to a double of the vertical scanning frequency to remove field flicker have been developed in recent years. An example of a digital television receiver which uses such a vertical deflection signal with a doubled vertical scanning frequency is described below.

US-A-3,995,109 relates to the digital vertical sync pulse circuit. In the case where the vertical sync pulse separated from the input video signal is not detected, a substitute vertical sync pulse generated by using an oscillator is used.

Furthermore it is known from EP-B-0162116 a television receiver in which field flickers are removed. To this end, the display of the television receiver is effected with the field frequency being doubled. More specifically, the field frequency of the input video signal is doubled to produce a twice field frequency video signal. The vertical sync pulse separated from the input video signal in the separating circuit is multiplied by a frequency multiplier 11 to form a signal of frequency twice the normal frequency.

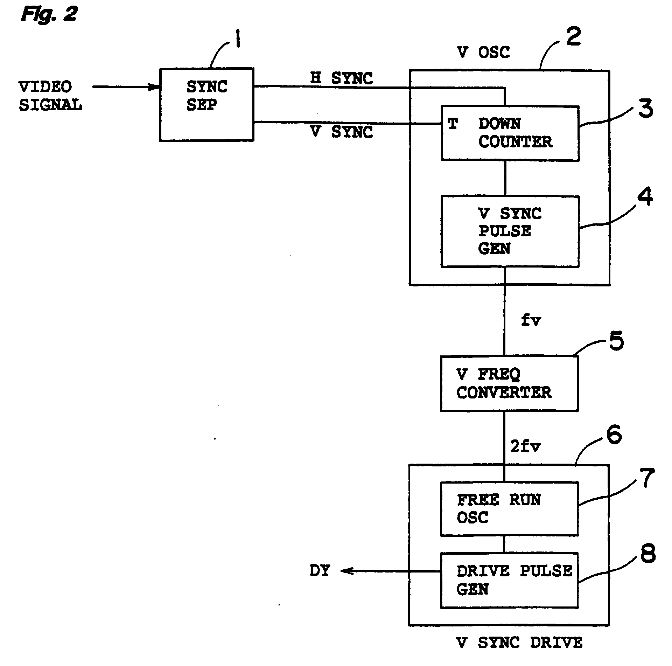

Another prior art vertical deflection signal generator is shown in Fig. 2, which is provided in a digital television receiver. The vertical deflection signal generator doubles the vertical scanning frequency to produce a deflection signal which is applied to a deflection yoke DY. The vertical deflection signal generator comprises: a synchronization signal separator 1; a vertical oscillation circuit 2, including a down counter 3 and a vertical synchronization pulse generator 4, for generating vertical synchronization pulse having a v-sync frequency fv (fv is also used for indicating the signal with frequency fv); a vertical frequency converter 5 for doubling the v-sync frequency to 2fv (2fv is also used for indicating the signal with frequency 2fv); and a vertical synchronization driver 6 including a free run oscillator 7 and a drive pulse generator 8.

The operation of the vertical deflection signal generator in a digital television receiver is described below.

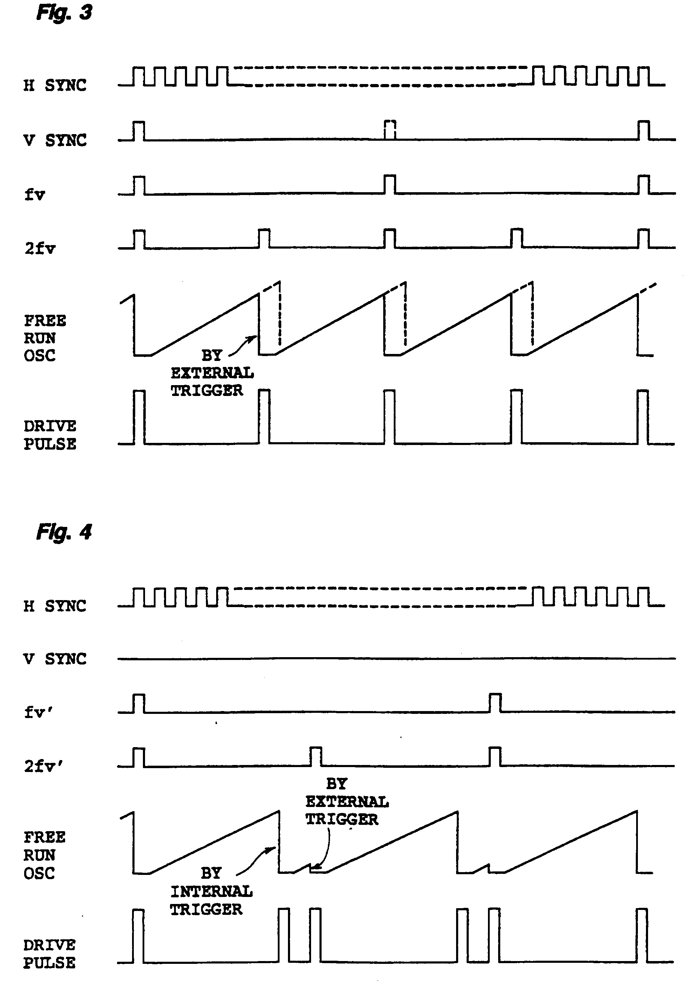

From the received video signal, the synchronization signals (H sync and V sync) are separated by the synchronization signal separation circuit 1, and the composite signals of H sync and V sync as shown in Fig. 3 are input to the vertical oscillation section 2. In the vertical oscillation section 2, V sync signal is used for triggering the down counter 3. The down counter 3 counts down to zero using the H sync signal, so as to count a signal length substantially equal to one field. Therefore, even if synchronization signal separator 1 fails to produce a V sync pulse, such as indicated by a dotted line in Fig. 3, vertical synchronization pulse generator 4 produces a V sync pulse fv without failure. The frequency-doubled V sync pulse 2fv is applied to the free run oscillator 7 which has a CR circuit for charging and discharging the capacitor in a predetermined frequency. The discharging shown by a dotted line is effected by an internal trigger produced within the free run oscillator 7. Before the capacitor is discharged by the internal trigger, the frequency-doubled V sync pulse 2fv is used for triggering the discharge of the capacitor. Thus, the discharging of the capacitor would be as shown by a solid line. The triggering of the capacitor by the V sync pulse 2fv is referred to as an external trigger. In response to the discharge of the capacitor, the drive pulse generator 8 produces drive pulses to drive the deflection yoke DY.

However, according to the prior art vertical deflection signal generator, there is such a disadvantage.

When the video signal is from a source that does not have a V sync signal, such as the test signal of the video tape recorder (VCR), as shown in Fig. 4, the vertical oscillation circuit 2 produces an error vertical synchronization pulse having a v-sync frequency fv' which is smaller than the correct v-sync frequency fv. Thus, the pulse repetition period of the error vertical synchronization pulse fv would be greater than that of the correct vertical synchronization pulse fv'. Eventually, the frequency of the frequency-doubled V sync pulse 2fv' would be reduced to expand the pulse repetition period. Thus, the triggering of the free run oscillator 7 takes place by the internal trigger and also by the external trigger, as shown in Fig. 4.

Therefore, in the case where the video signal source without the V sync signal is used, drive pulses are produced in wrong timing. Accordingly, in such a case, the picture formed on the screen will be utterly distorted.

The present invention has been developed with a view to substantially solving the above described disadvantages and has for its essential object to provide an improved vertical deflection signal generator which can produce a V sync pulse fv even when a video signal without V sync signal is received.

The invention is as set out in the claim.

These and other objects and features of the present invention will become clear from the following description taken in conjunction with the preferred embodiments thereof with reference to the accompanying drawings throughout which like parts are designated by like reference numerals, and in which:
Fig. 1 is a block diagram of a vertical deflection signal generator according to a preferred embodiment of the present invention;
Fig. 2 is a block diagram of the vertical deflection signal generator according to a prior art;
Fig. 3 is a diagram showing waveforms when the correct drive pulses are produced; and
Fig. 4 is a diagram showing waveforms when the error drive pulses are produced.

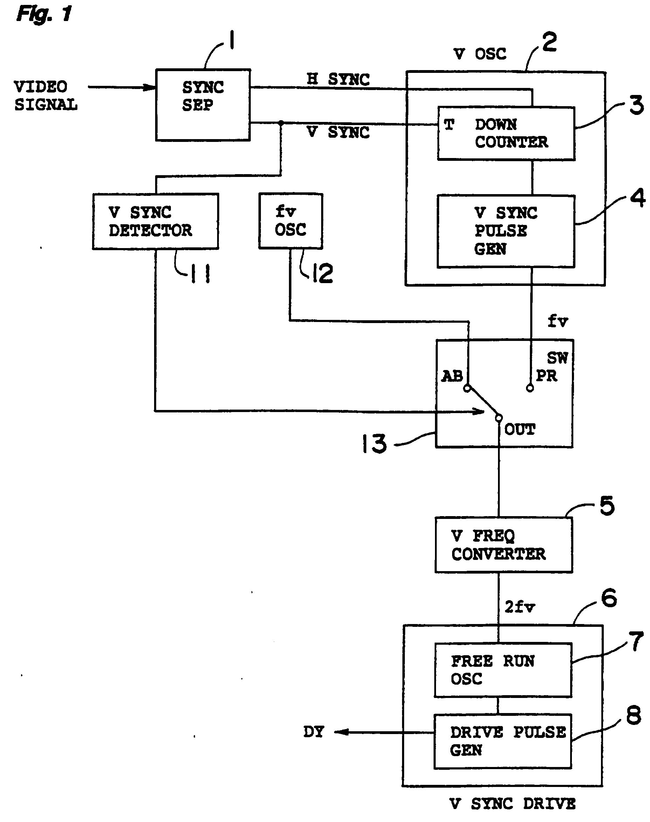

Referring to Fig. 1, a preferred embodiment of a vertical deflection signal generator equipped in a digital television receiver is shown.

A vertical deflection signal generator shown in Fig. 1 comprises: a synchronization signal separator 1; a vertical oscillation circuit 2, including a down counter 3 and a vertical synchronization pulse generator 4, for generating vertical synchronization pulse having a v-sync frequency fv (fv is also used for indicating the signal with frequency fv); a vertical frequency converter 5 for doubling the v-sync frequency to 2fv (2fv is also used for indicating the signal with frequency 2fv); and a vertical synchronization driver 6 including a free run oscillator 7 and a drive pulse generator 8.

The vertical deflection signal generator according to the present invention further comprises: a V sync detector 11 for detecting the presence and absence of the V sync signal; an fv oscillator 12 for producing quasi fv pulses having a frequency equal to fv; and a switching circuit 13 having two inputs AB and PR which are connected respectively to fv oscillator 12 and vertical synchronization pulse generator 4, and one output OUT which is connected to vertical frequency converter 5. The output from the V sync detector 11 is applied to the switching circuit 13 for controlling the switching operation such that, when the V sync signal is absent, the output OUT is connected to input AB, and when the V sync signal is present, the output OUT is connected to input PR.

The operation of the vertical deflection signal generator according to the present embodiment is described below.

First, a case in which the received video signal has both the H sync and V sync is explained.

From the received video signal, the synchronization signals (H sync and V sync) are separated by the synchronization signal separation circuit 1, and the composite signal of H sync and V sync as shown in Fig. 3 are input to the vertical oscillation section 2.

In this case, the V sync detector 11 detects the presence of the V sync signal. Thus, the switching circuit 13 is switched to such a position that the output put OUT is connected to input PR.

In the vertical oscillation section 2, V sync signal is used for triggering the down counter 3. The down counter 3 counts down to zero using the H sync signal, so as to count a signal length substantially equal to one field. Therefore, even if synchronization signal separator 1 fails to produce a V sync pulse, such as indicated by a dotted line in Fig. 3, vertical synchronization pulse generator 4 produces a V sync pulse fv without failure. The V sync pulse fv is transmitted through the switching circuit 13 to vertical frequency converter 5 from which the frequency-doubled V sync pulse 2fv is produced.

The frequency-doubled V sync pulse 2fv is applied to the free run oscillator 7 which has a CR circuit for charging and discharging the capacitor in a predetermined frequency. The discharging shown by a dotted line in Fig. 3 is effected by an internal trigger which is produced within the free run oscillator 7. Before the capacitor is discharged by the internal trigger, the frequency-doubled V sync pulse 2fv is used for triggering the discharge of the capacitor. Thus, the discharging of the capacitor would be as shown by a solid line. The triggering of the capacitor by the V sync pulse 2fv is referred to as an external trigger. In response to the discharge of the capacitor, the drive pulse generator 8 produces drive pulses to drive the deflection yoke DY.

Next, a case in which the received video signal has only the H sync is explained.

In this case, the V sync detector 11 detects the absence of the V sync signal. Thus, the switching circuit 13 is switched to such a position that the output OUT is connected to input AB.

Thus, the quasi fv pulses produced from the fv oscillator 12 are applied through the switching circuit 13 to vertical frequency converter 5. Thereafter, the operation similar to that explained above is carried out in vertical synchronization driver 6 to produce correct drive pulses.

In the above embodiment, the vertical oscillation circuit 2 is formed by the down counter 3 and vertical synchronization pulse generator 4, but any other oscillation circuit, such as CR oscillator can be used.

According to the present invention, since V sync detector 11 is provided to the switching circuit 13, the vertical synchronization driver 6 can produce correct drive pulses even when a video signal, such as a VCR TEST signal, containing a horizontal synchronization signal but not a vertical synchronization signal component is received.

## Claims

1. A vertical deflection signal generator for use in a digital television having a synchronisation separator (1) having its output connected to a vertical oscillation circuit (2) for generating a vertical synchronization signal (fv), a vertical frequency converter (5) for doubling the vertical synchronization signal, and a vertical synchronization driver (6) for producing a vertical synchronization drive pulse in response to the doubled vertical synchronization signal (2fv),
CHARACTERIZED IN THAT:
oscillator means (12) for producing a quasi vertical synchronization signal; means (11) for detecting the presence or absence of the vertical synchronization signal outputted from the synchronisation separator (1) ; and switching means (13) are provided such that, when the presence of the vertical synchronization signal is detected, the vertical synchronization signal generated by the vertical oscillation circuit (2) is applied to the vertical frequency converter (5), but when the absence of the vertical synchronization signal is detected, the quasi vertical synchronization signal from the oscillator means (12) is applied to the vertical frequency converter (5).

## Patentansprüche

1. Vertikalablenkungssignalgenerator zur Verwendung in einem digitalen Fernsehgerät mit einem Synchronisationsseparator (1), dessen Ausgang an eine Vertikaloszillationsschaltung (2) angeschlossen ist, zum Erzeugen eines Vertikalsynchronisationssignales (fv), einem Vertikalfrequenzwandler (5) zum Verdoppeln des Vertikalsynchronisationssignals, und einem Vertikalsynchronisationstreiber (6) zum Erzeugen eines Vertikalsynchronisationsansteuerungsimpulses als Reaktion auf das verdoppelte Vertikalsynchronisationssignal (2fv),
dadurch gekennzeichnet, daß:
eine Oszillationseinrichtung (12) zum Erzeugen eines Quasi-Vertikalsynchronisationssignals; eine Einrichtung (11) zum Erfassen des Vorhandenseins oder Nichtvorhandenseins des von dem Synchronisationsseparator (1) ausgegebenen Vertikalsynchronisationssignals; und eine Umschalteinrichtung (13) vorgesehen sind, so daß, wenn das Vorhandensein des Vertikalsynchronisationssignals erfaßtwird, daß durch die Vertikaloszillationsschaltung (2) erzeugte Vertikalsynchronisationssignal an den Vertikalfrequenzwandler (5) angelegt wird, jedoch, wenn das Nichtvorhandensein des Vertikalsynchronisationssignals erfaßt wird, das Quasi-Vertikalsynchronisationssignal von der Oszillatoreinrichtung (12) an den Vertikalfrequenzwandler (5) angelegt wird.

## Revendications

1. Générateur de signal de déflexion verticale utilisé dans une télévision numérique ayant un séparateur de synchronisation (1) ayant sa sortie raccordée à un circuit d'oscillation verticale (2) pour générer un signal de synchronisation verticale (fv), un convertisseur de fréquence verticale (5) pour doubler le signal de synchronisation verticale, et un dispositif de commande de synchronisation verticale (6) pour produire une impulsion de commande de synchronisation verticale en réponse au signal de synchronisation verticale doublée (2fv),
caractérisé en ce que :
un dispositif oscillateur (12) pour produire un signal de synchronisation quasi vertical ; un dispositif (11) pour détecter la présence ou l'absence du signal de synchronisation verticale fourni par le séparateur de synchronisation (1) ; et un dispositif de commutation (13) sont fournis pour que, lorsque la présence du signal de synchronisation verticale est détectée, le signal de synchronisation verticale généré par le circuit d'oscillation verticale (2) soit appliqué au convertisseur de fréquence verticale (5), mais lorsque l'absence du signal de synchronisation verticale est détectée, le signal de synchronisation quasi verticale du dispositif oscillateur (12) soit appliqué au convertisseur de fréquence verticale (5).
